# EUROPÄISCHE PATENTSCHRIFT

(11) **EP 1 258 512 B1**
(45) Veröffentlichungstag und Bekanntmachung des Hinweises auf die Patenterteilung: **11.10.2006**
(21) Anmeldenummer: 02010107.7
(22) Anmeldetag: 08.05.2002
(51) Int. Cl.: C09D 161/24, C09D 161/28, C08L 61/24, C08L 61/28, C08G 12/42

(54) **Wässrige Aminoharzgemische**
Aqueous amino resin compositions
Compositions aqueuses de résine amino

(30) Priorität: 17.05.2001 DE 10123948
(43) Veröffentlichungstag der Anmeldung: 20.11.2002
(73) Patentinhaber: Cytec Surface Specialties Germany GmbH & Co. KG, 65203 Wiesbaden (DE)
(72) Erfinder: Scholl, Frank, 61352 Homburg (DE); Wonner, Johann, Dr., 63110 Rodgau (DE); Scholz, Wolfgang, Dr., 63067 Offenbach (DE)
(74) Vertreter: Deckers, Hellmuth Alexander

(56) Entgegenhaltungen:
- EP-A- 1 152 043
- WO-A-88/06176
- US-A- 3 352 838
- US-A- 4 374 899
- US-A- 4 713 299
- PATENT ABSTRACTS OF JAPAN vol. 004, no. 030 (C-002), 15. März 1980 (1980-03-15) & JP 55 005967 A (HITACHI CHEM CO LTD), 17. Januar 1980 (1980-01-17)
- PATENT ABSTRACTS OF JAPAN vol. 005, no. 024 (C-043), 13. Februar 1981 (1981-02-13) & JP 55 149342 A (MITSUI TOATSU CHEM INC), 20. November 1980 (1980-11-20)
- DATABASE WPI Week 198104, Derwent Publications Ltd., London, GB; Class A21, AN 1981-04937D & JP 55 149 342 A (MITSUI TOATSU CHEM IND) 20 November 1980

## Beschreibung

Die vorliegende Erfindung betrifft wäßrige Aminoharzgemische, die Zusätze von aliphatischen Aminen mit mindestens einer sekundären Aminogruppe und mindestens einer Hydroxylgruppe enthalten, deren Verwendung als Tränkharze und Verfahren zur Verminderung der Formaldehyd-Emission aus Imprägnaten durch Zusatz derartiger Amine zu Aminoharzen.

Zur Beschichtung von Flächen bzw. Schmalflächen von Holzwerkstoffen werden lackierte Folien ("Finish-Folien") bzw. Kartonimprägnate ("Kanten") eingesetzt (Kunststoff-Handbuch Bd. 10, Duroplaste, Hanser-Verlag, 2. Aufl. 1988, S. 462 f., S.477 bis 479). Zur Herstellung solcher Finish-Folien und Kanten werden saugfähige Papiere mit Aminoharzen (Duroplasten) wie z.B. Harnstoff-Formaldehyd- und/oder Melamin-Formaldehyd-Harzen, gegebenenfalls in Kombination mit wäßrigen Dispersionen von thermoplastischen Harzen wie Acrylat-Dispersionen oder Acrylat-Styrol-Dispersionen, imprägniert, im Heißluftstrom getrocknet und gleichzeitig ausgehärtet und anschließend lackiert.

In dem Dokument WO 88/06176 A1 werden wäßrige Zweikomponentenlacke zur Beschichtung von Finish-Folien und Kanten beschrieben. Diese Lacke enthalten ein selbstvernetzendes Acrylatharz (A) mit Säureamidstrukturen, ein in Wasser gelöstes oder dispergiertes Melaminharz (B), gegebenenfalls ein Harnstoffharz (C), eine Polyolkomponente (D)sowie eine Aminkomponente (E). Als mögliche Bestandteile der Polyolkomponente (D) werden tri- und höherfunktionelle Alkohole wie Trimethylolpropan, Ditrimethylolpropan, Pentaerythrit, Dipentaerythrit, Trimethyloläthan, Glycerin, Triäthanolamin (ein tertiäres Amin), Mischpolymerisate von Polyäthylen- und Polypropylenoxid, äthoxylierte oder propoxylierte Derivate der genannten Alkohole, Trishydroxyäthylisocyanurat und weiter Hydroxylgruppen enthaltende Polyester genannt. Als Aminkomponente (E) werden Ammoniak, Triäthylamin, Dimethyl- und Diäthylaminoäthanol, 2-Amino-2-äthyl-propandiol-1,3 und 2-Amino-2-hydroxymethylpropandiol-1,3 genannt.

Ein ausreichend gutes Penetrationsverhalten der Tränkflotten in das Papier wird gewährleistet, wenn die Harzlösungen aus wäßriger oder alkoholischer Verdünnung verarbeitet werden. Aufgrund der hohen Zellstoffquellung in wäßrigen Systemen sind die aus hoher wäßriger Verdünnung hergestellten Folien und Kanten spröde, weisen eine hohe Wasseraufnahme auf und zeigen auch im lackierten Zustand eine optisch nur wenig ansprechende Oberfläche. Die in DE-A 23 09 334 beschriebene Arbeitsweise unter Verwendung von mit C₁- bis C₄-Alkoholen verdünnten Tränkflotten ergibt zwar Folien und Kanten mit guten anwendungstechnischen Eigenschaften, erfordert aber aufwendige Maßnahmen zur Abluftaufbereitung. Der in DE-A 44 39 156 beschriebene Lösungsweg durch Modifizierung von Melaminharzen mit Guanaminen ermöglicht das Imprägnieren aus rein wäßrigen Tränkflotten. Nachteilig sind allerdings die durch den Einsatz der Guanamine bedingten deutlich höheren Kosten für das Aminoharz. In der Patentanmeldung DE-A 198 35 114 werden methylverätherte wäßrige Melamin-Formaldehydharze zur Herstellung von Mikrokapseln beansprucht, denen Ammoniak, primäre, sekundäre oder tertiäre Amine zugesetzt werden. Über die vorteilhafte Wirkung von (Hydroxyalkyl)Aminen auf die Reduktion von Formaldehydemissionen aus Finish-Folien und Kanten wird nicht berichtet.

In der EP-A 0 913 412 werden unverätherte Harnstoff-Formaldehyd-Harze mit einem Massenanteil an einkondensiertem Melamin im fertigen Harz von 1 bis 5 % beschrieben, wobei die Reaktionsmischung nach vollendeter Kondensation durch Zusatz bestimmter tertiärer Hydroxyalkylamine (bevorzugt Triäthanolamin, Methyldiäthanolamin und Dimethyläthanolamin) neutralisiert wird. Diese Harze werden als Imprägnierharze verwendet. Über die vorteilhafte Wirkung von (Hydroxyalkyl)Aminen auf die Reduktion von Formaldehydemissionen aus Finish-Folien und Kanten wird nicht berichtet.

Die Formaldehydemissionen fertiger Finish-Folien und Kanten werden nach Lagerung im Normklima (23 °C, 50 % relative Luftfeuchtigkeit) in Anlehnung an die Norm EN 717-2 ("FESYP-Methode", Gasanalyse) ermittelt. Folien und Kanten mit Werten für die Formaldehyd-Emission von kleiner als 3,6 mg/(h·m²) nach der FESYP-Methode erfüllen den Grenzwert ("E 1") und werden nachfolgend als "E1-Kanten" bezeichnet. Die ermittelten Emissionsraten bleiben auch nach mehrwöchiger Lagerung im Normklima nahezu unverändert. Die Formaldehydemissionen werden durch den Einsatz von Harnstoff- und/oder Melamin-Formaldehydharzen in den Tränkflotten zur Imprägnierung der Papier- bzw. Kartonbahnen bzw. in den Lackrezepturen zur Lackierung der Folien und Kanten verursacht. Durch Einsatz besonders formaldehydarmer Harnstoff- und/oder Melamin-Formaldehyd-Harze lassen sich die Formaldehydemissionen, gemessen nach der FESYP-Methode (Normklima), auf Werte um 2 mg/(h·m²) reduzieren.

Überraschend wurde nun festgestellt, daß bei Lagerung von nach dem Stand der Technik hergestellten E1-Kanten, mit Anfangswerten für die Formaldehydemission von 1,0 bis 3,5 mg/(h·m²), insbesondere unter nicht standardisierten Klimabedingungen bei im Sommer üblichen Temperaturen und Luftfeuchtigkeiten die Formaldehydemissionen im Verlauf von wenigen Wochen auf Werte von z. T. deutlich größer als 3,5 mg/(h·m²) ansteigen und somit die Kanten nicht mehr dem E1-Kriterium genügen. Dieser unerwartet hohe Anstieg der Formaldehydemission ließ sich durch Lagerung unter definierten Bedingungen im Tropenklima (35 °C, 90 % relative Luftfeuchtigkeit) bestätigen, wobei vor jeder Messung eine dreitägige Rekonditionierung im Normklima an die Lagerung im Tropenklima angeschlossen wurde.

Nach dem Stand der Technik ist bekannt, daß sich der Gehalt an freiem Formaldehyd sowie die Emissionen von Formaldehyd durch Zusätze von Formaldehydfängern wie z.B. Harnstoff und Harnstoffderivaten reduzieren lassen. So lassen sich nach der DE-A 38 37 965 Finish-Folien und Kanten mit nach DIN 52368 vernachlässigbarer Formaldehydabgabe durch Zusatz von Harnstoff zum Melamin-Formaldehyd-Kondensationsprodukt herstellen. Zum Verhalten beim Lagern insbesondere im Tropenklima werden allerdings keine Angaben gemacht.

Nach der DE-A 34 03 136 eignen sich Mischungen aus organischen Hydroxylverbindungen und einem Amid als formaldehydbindende Mittel in Platten aus Holzcellulosematerialien. Der Einsatz dieser Mischungen als Formaldehydfänger in Finish-Folien und Kanten wird nicht beschrieben. Ein Zusatz der in DE-A 34 03 136 beschriebenen Mischungen zu Aminoharzen, die zur Herstellung von Finish-Folien und Kanten eingesetzt werden, führt zu einer deutlichen Verschlechterung der Flexibilität der damit hergestellten Finish-Folien und Kanten. Der Einsatz literaturbekannter Formaldehydfänger wie Harnstoff, Äthylenharnstoff bzw. Propylenharnstoff ergab Finish-Folien und Kanten, die im Normalklima das E1-Kriterium erfüllten, im Tropenklima jedoch den E1-Grenzwert von 3,5 mg/(h·m²) deutlich überschritten.

Aufgabe der vorliegenden Erfindung ist es, modifizierte Aminoharze zur Herstellung von Folien und Kanten bereitzustellen, mit denen gegenüber dem Stand der Technik Finishfolien bzw. Möbelkanten mit deutlich reduzierter Formaldehydemission bei Lagerung insbesondere auch im Tropenklima unter Erhalt der ansonsten geforderten anwendungstechnischen Eigenschaften hergestellt werden können.

Die Aufgabe wird gelöst durch wäßrige Aminoharzgemische, die einen Zusatz von aliphatischen linearen, verzweigten oder cyclischen Aminen mit mindestens einer sekundären Amingruppe, mindestens einer Hydroxylgruppe und 2 bis 20 Kohlenstoffatomen enthalten.

Gegenstand der Erfindung ist daher ein Verfahren zur Verminderung der Formaldehyd-Emission aus Folien und Kanten, wobei zur Imprägnierung wäßrige Aminoharzgemische verwendet werden, enthaltend aliphatische lineare, verzweigte oder cyclische Amine **A** mit mindestens einer sekundären Aminogruppe, mindestens einer Hydroxylgruppe und 2 bis 20 Kohlenstoffatomen sowie unverätherte oder zumindest teilweise verätherte Aminoharze **B**.

Der Zusatz dieser Amine **A** bewirkt eine Reduktion der Formaldehydemissionen aus den Imprägnaten um bis zu 90 % im Vergleich zu dem gleichen Harzgemisch ohne Zusatz an Amin.

Ein weiterer Gegenstand der vorliegenden Erfindung ist die Verwendung von Aminen **A** mit mindestens einer sekundären Aminogruppe, mindestens einer Hydroxylgruppe und 2 bis 20 Kohlenstoffatomen als Zusatz zu Aminoharzen bei der Imprägnierung von Papier- oder Kartonbahnen zur Reduktion der Formaldehyd-Emission.

Die Erfindung betrifft auch ein wäßriges Aminoharzgemisch, enthaltend aliphatische lineare, verzweigte oder cyclische Amine **A** mit mindestens einer sekundären Aminogruppe, mindestens einer Hydroxylgruppe und 2 bis 20 Kohlenstoffatomen sowie unverätherte oder zumindest teilweise verätherte Aminoharze **B**, wobei die Aminoharze einen Massenanteil von Melamin in dem Aminoharz von weniger als 1 % oder mehr als 5 % aufweisen, wenn die Amine **A** tertiäre Hydroxyalkylamine enthalten. Bevorzugt beträgt hier der Massenanteil von Melamin in dem Aminoharz mindestens 7 %, und insbesondere mindestens 10 %, bzw. höchstens 0,9 %, insbesondere höchstens 0,75 %, und besonders bevorzugt höchstens 0,5 %.

Diese Gemische ergeben bei ihrer Verwendung als Imprägniermittel zur Herstellung von Finish-Folien und Kanten solche Imprägnate (Folien und Kanten), die sich durch eine deutlich verminderte Formaldehyd-Emission auszeichnen.

Die Amine **A** haben bevorzugt 4 bis 12 Kohlenstoffatome. Bevorzugt ist die Zahl der Hydroxylgruppen in den Aminen **A** mindestens so groß wie die Zahl der Aminogruppen. Insbesondere haben die bevorzugten Amine ausschließlich sekundäre Aminogruppen, besonders bevorzugt ist weiter bei diesen Aminen die Anzahl der Hydroxylgruppen um mindestens eins größer als die Anzahl der sekundären Aminogruppen. Solche Amine sind Diäthanolamin, Bis-2-hydroxypropylamin, Bis-3-hydroxypropylamin, N-Methyläthanolamin, N-Benzyläthanolamin, 2-Hydroxyäthylpiperazin und N, N'-Bis-(2-hydroxyäthyl)-diaminoäthan.

Die Aminoharze **B** sind unverätherte oder mit aliphatischen linearen oder verzweigten Alkoholen, insbesondere mit C₁- bis C₄-Alkoholen, zumindest teilweise verätherte, in Wasser lösliche Melamin-Formaldehyd-Harze, Harnstoff-Formaldehyd-Harze oder Melamin-Harnstoff-Mischkondensate. Unter "zumindest teilweise veräthert" wird hier verstanden, daß mindestens 10 % der von der Addition von Formaldehyd an den Aminoplastbildner herrührenden Gruppen (Methylolgruppen, N-Methylengruppen und Alkoxymethylgruppen) in Form von Alkoxymethylgruppen vorliegen. In den erfindungsgemäßen Zusammensetzungen lassen sich auch solche Aminoharze einsetzen, bei denen ein Teil (bis zu 20 % ihrer Masse) durch von Melamin verschiedene Aminotriazine wie Acetoguanamin, Caprinoguanamin oder Benzoguanamin ersetzt ist. Bevorzugt werden jedoch Harze mit Gehalten an diesen von Melamin verschiedenen Aminotriazinen von weniger als 10, insbesondere von weniger als 5 %, gemessen in derselben Skala.

In den Aminoharzen **B** beträgt der Stoffmengenanteil von Aminotriazinen, bezogen auf die Summe der Stoffmengen von Aminotriazinen und Harnstoff, 0 bis 1 mol/mol. Der Gehalt an gebundenem Formaldehyd je NH₂-Gruppe in den Aminoharzen **B**, gemessen als Quotient der Stoffmenge von N-Methylolgruppen und der Summe der Stoffmengen von freien Aminogruppen und (einfach und doppelt) methylolierten Aminogruppen beträgt 0,5 bis 2,0 mol/mol, bevorzugt 0,55 bis 1,95 mol/mol, und insbesondere 0,6 bis 1,9 mol/mol. Der Gehalt an Alkoxygruppen, die von gebundenem Verätherungsalkohol herrühren, gemessen als Quotient der Stoffmenge von Alkoxygruppen und der Summe der Stoffmengen von freien, methylolierten und alkoxymethylierten Aminogruppen in den Aminoharzen **B** beträgt 0,0 bis 2,0 mol/mol, bevorzugt 0,1 bis 1,95 mol/mol, und insbesondere 0,15 bis 1,9 mol/mol. Die Harze werden gegebenenfalls mindestens teilweise mit den genannten Alkoholen, insbesondere Methanol, Äthanol, n-Butanol und Isobutanol, veräthert. Besonders bevorzugt sind mit Methanol verätherte Aminoharze.

Die Herstellung der Aminoharze **B** ist allgemein bekannt. Zunächst wird durch Zusatz von Aminoplastbildnern (Melamin, Harnstoff, gegebenenfalls die oben genannten anderen Aminotriazine) zu Formaldehyd bei pH-Werten von 7 bis 10 und Temperaturen von 40 bis 110 °C methyloliert und kondensiert, anschließend wird gegebenenfalls der Verätherungsalkohol zugegeben und bei pH-Werten von 1 bis 7 bei Temperaturen von 30 bis 80 °C weiterreagiert. Die Kondensations- und Verätherungsbedingungen richten sich nach der für das Harz gewünschten Wasserverdünnbarkeit, die mindestens 1 Gewichtsteil Harz zu 5 Gewichtsteilen entsalztes Wasser beträgt, sowie nach den geforderten Penetrationseigenschaften.

Die erfindungsgemäßen Aminoharzgemische können weiter Zusätze enthalten, insbesondere Polyäthylenglykole **C1** und/oder wäßrige Dispersionen eines Copolymerisats **C2**, das bevorzugt mindestens einen Massenanteil von 50 % an Einheiten abgeleitet von (Hydroxy)Alkyl(meth)acrylaten und/oder (Meth)Acrylsäure enthält. Unter (Hydroxy)Alkyl-(meth)acrylaten werden hier Hydroxyalkylacrylate, Hydroxyalkylmethacrylate, Alkylacrylate und/oder Alkylmethacrylate verstanden. Weiterhin haben sich Zusätze zu den wäßrigen Aminoharzgemischen von Harnstoff (0,5 bis 5 cg /g; das ist 0,5 bis 5 g /(100 g)) und höherfunktionellen Alkoholen mit 3 bis 6 Hydroxylgruppen wie Trimethylolpropan, Erythrit, Pentaerythrit, Ditrimethylolpropan, Dipentaerythrit, Xylit, Sorbit und Mannit (0,5 bis 7 cg /g, das ist 0,5 bis 7 g / (100 g)) als vorteilhaft erwiesen. Die angegebene Zusatzmenge bedeutet jeweils die Masse des Zusatzes, bezogen auf 100 g des (unverdünnten) Aminoharzes. Diese Zusätze werden nach der Kondensation des Aminoharzes zugefügt und liegen daher in nicht einkondensierter Form vor.

Geeignete Polyäthylenglykole **C1** sind Oligomere oder Polymere mit (zahlenmittleren) molaren Massen Mₙ bis zu ca. 2000 g/mol. Bevorzugt werden flüssige Polyäthylenglykole mit molaren Massen Mₙ von 200 bis 600 g/mol. Sie werden gegebenenfalls in solchen Mengen eingesetzt, daß das Verhältnis der Masse an **C1** zur Masse des Feststoffanteils in der Lösung bzw. Dispersion des Aminoharzes zwischen 5 und 50 cg/g (das ist 5 und 50 g/(100 g)), bevorzugt 15 bis 45 cg/g (das ist 15 bis 45 g/(100 g)), beträgt.

Die Copolymerisat-Dispersionen **C2** sind beispielsweise durch Emulsions-Copolymerisation von olefinisch ungesättigten Monomeren herstellbare Dispersionen von Acrylat-Copolymerisaten in Wasser, wobei die zu ihrer Herstellung verwendete Monomerenmischung bevorzugt einen überwiegenden Anteil (mehr als 50 % ihrer Masse) an sog. Acrylmonomeren enthält, also Acryl- oder Methacrylsäure und deren Derivaten, insbesondere Estern mit aliphatischen Alkoholen mit 1 bis 10 Kohlenstoffatomen, und Estern mit aliphatischen Polyhydroxyverbindungen mit 2 bis 10 Kohlenstoffatomen und mindestens zwei Hydroxylgruppen pro Molekül. Bevorzugt werden als Acrylmonomere unter den Estern Methyl-, Äthyl-, n-Butyl-, t-Butyl-, Hexyl- und 2-Äthylhexyl-(meth)acrylat, Hydroxyäthyl- und Hydroxypropyl-(meth)acrylat. Weiter können copolymerisierbare Monomere wie Styrol und andere aromatische Vinylverbindungen, Nitrile von olefinisch ungesättigten Säuren wie (Meth)acrylnitril, Ester oder Halbester von olefinisch ungesättigten Dicarbonsäure wie insbesondere Maleinsäure, Vinylester wie Vinylacetat oder Vinylversatat, Vinylhalogenide oder Vinyläther copolymerisiert werden. Diese Dispersionen haben üblicherweise Feststoff-Massenanteile von 25 bis 85 %; sie werden dem Aminoharz oder aber erst der Tränkflotte zugesetzt. Das Verhältnis der Masse des Copolymerisats in der Copolymerisat-Dispersion **C2** zur Masse des Aminoharzes **B** in dessen wäßriger Lösung oder Dispersion kann in der Zusammensetzung (5 bis 150 g) : 100 g betragen, vorzugsweise (20 bis 140 g): 100 g.

Die mit den erfindungsgemäßen Aminoharzgemischen hergestellten Finish-Folien und Kanten zeichnen sich gegenüber dem Stand der Technik durch eine um bis zu 90% reduzierte Emission von Formaldehyd im Normklima und im Tropenklima aus. Die anwendungstechnischen Eigenschaften der Aminoharzgemische und die Eigenschaften der so hergestellten Finish-Folien und Kanten sind denen des Standes der Technik ansonsten ebenbürtig.

In den nachfolgenden Beispielen wird die Erfindung erläutert. Dabei bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiele:

### Beispiel 1: Wäßriges, mit Methanol teilveräthertes Melamin-Formaldehyd-Harz

In einem 30 1-Laborkessel mit Rührer, Rückflußkühler und Thermometer wurden 6717 g (87,2 mol) 39 %iger wäßriger Formaldehyd vorgelegt und auf 68 °C angeheizt. Dann wurden 31,5 ml 2 N Natronlauge zugesetzt und sofort danach 3450 g (27,4 mol) Melamin dazugegeben. Der Ansatz erwärmte sich durch die exotherme Reaktion von Melamin und Formaldehyd auf ca. 83 °C und wurde solange bei dieser Temperatur gehalten, bis das Melamin vollständig in Lösung gegangen war. Dann wurde auf 55 °C abgekühlt und es wurden 16560 g (517 mol) Methanol und 30 ml 53 %ige Salpetersäure zugesetzt. Das Reaktionsgemisch wurde auf 59 °C angeheizt und solange bei dieser Temperatur gerührt, bis der Ansatz klar wurde. Nach weiteren 30 Minuten wurde die Reaktion durch Zugabe von ca. 140 ml 2 N NaOH abgebrochen. Der pH-Wert wurde auf 10 eingestellt. Überschüssiges Methanol wurde unter vermindertem Druck (Wasserstrahlpumpe, ca. 20 mbar = ca. 20 hPa) abdestilliert und der Festkörper-Massenanteil der Harzlösung auf ca. 75 % (gemessen als Rückstand von 2 g der Harzlösung nach Trocknen während 1 h bei 120 °C, Glasschale) eingestellt. Die Harzlösung hatte folgende Kennzahlen: Festkörper-Massenanteil: 75 %, Viskosität bei 23 °C: 480 mPa·s, Massenanteil an freiem Formaldehyd: 0,17 %, Wasserverdünnbarkeit: unbegrenzt.

### Beispiel 2: Anwendungstechnische Prüfung

Zu jeweils 100 g der Harzlösung aus Beispiel 1 wurden die in untenstehender Tabelle angegebenen Mengen an Polyäthylenglykol 400 ("PEG", zahlenmittlere molare Masse Mₙ = 400 g/mol), p-Toluolsufonsäure (TSS) sowie die weiteren angegebenen Hilfsmittel zugesetzt. Die Tränkflotte wurde jeweils durch Zugabe von VE-Wasser (voll entsalztem Wasser) auf einen Festkörper-Massenanteil (nicht flüchtigen Anteil, "nfA") von 75 % (gemessen als Trockenrückstand nach Trocknung während 1 h bei 120 °C, Glasschälchen) eingestellt. Diese Harzflotten wurden auf Papiere mit einer flächenbezogenen Masse von ca. 200 g/m² (typischer Kantenkarton) aufgerakelt, die imprägnierten Papiere wurden dann 90 Sekunden bei 180 °C (im Umluftofen) getrocknet. Der Harzauftrag betrug 38 bis 42 % (Masse an Festharz bezogen auf die Masse des trockenen, unimprägnierten Papiers).

Zur Bestimmung der Formaldehydemissionen wurden Proben des imprägnierten Papiers (Kantenproben) vor jeder Messung 3 Tage im Normklima (23 °C, 50 % relative Luftfeuchtigkeit) konditioniert. Zur Bestimmung der Formaldehydemissionen im Tropenklima wurden die Kantenproben 1 Woche bei 35 °C und 90 % relativer Luftfeuchtigkeit gelagert sowie anschließend vor der eigentlichen Messung jeweils 3 Tage im Normklima rekonditioniert. Die Messung der Formaldehydemissionen (F-Emission) erfolgte nach EN 717-2. Die in der Tabelle angegebenen Formaldehydemissionen sind als Mittelwerte der 1 bis 4 Stunden-Werte (Mittelwert der Emission während der ersten Stunde, der Emission während der zweiten Stunde usw.) aufgelistet:

**Tabelle 1: Zusammensetzungen der Tränkharze**

| (jeweils zu 100 g der Harzlösung aus Beispiel 1) und Formaldehydemissionen | | | | | | | |
|---|---|---|---|---|---|---|---|
| | PEG | TSS | Harnstoff | Sorbit* | Hilfsmittel | F-Emission Normklima mg/(h·m²) | F-Emission Tropenklima mg/(h·m²) |
| Beispiel 2.1 (Vergleich) | 26 g | 1,3 g | 1,1 g | 1,5 g | 8,7 g TEA | 0,24 | 0,80 |
| Beispiel 2.2 | 26 g | 1,3 g | 1,1 g | 1,5 g | 8,7 g DEA | 0,13 | 0,28 |
| Beispiel 2.3 | 28 g | 1,3 g | 1,1 g | 1,5 g | 7,0 g DEA | 0,16 | 0,28 |
| Beispiel 2.4 | 30 g | 1,3 g | 1,1 g | 1,5 g | 5,2 g DEA | 0,20 | 0,34 |
| Beispiel 2.5 | 31 g | 1,3 g | 1,1 g | 1,5 g | 3,5 g DEA | 0,22 | 0,45 |
| Beispiel 2.6 | 33 g | 1,3 g | 1,1 g | 1,5 g | 1,7 g DEA | 0,30 | 0,69 |
| Beispiel 2.7 (Vergleich) | 26 g | 1,3 g | 1,1 g | 1,5 g | 8,7 g DMEA | 0,46 | 1,44 |
| Beispiel 2.8 (Vergleich) | 31 g | 1,3 g | - | - | 4,7 g TEA | 0,43 | 0,86 |
| Beispiel 2.9 | 34,6 g | 1,3 g | - | - | 1,5 g DEA | 0,31 | 0,70 |
| Vergleichbeispiel 2.1 | 35 g | 1,3 g | - | - | - | 0,75 | 2,02 |
| Vergleichbeispiel 2.2 | 26 g | 1,3 g | 1,1 g | 1,5 g | 8,7 g TMP | 0,47 | 1,47 |
| Vergleichbeispiel 2.3 | 26 g | 1,3 g | 1,1 g | 1,5 g | - | 0,59 | 1,80 |

| | | | | | | | |
|---|---|---|---|---|---|---|---|
| Legende: *:Sorbit, 70%ige Lösung in Wasser DMEA = N,N-Dimethyläthanolamin TMP = Trimethylolpropan DEA = Diäthanolamin, TEA = Triäthanolamin, | | | | | | | |

Aus den Werten für die Formaldehydemission der Beispiele 2.1 bis 2.9 geht die besonders stark formaldehydreduzierende Wirkung des Zusatzes von Di- bzw. Triäthanolamin hervor. Diese Wirkung ist bei dem sekundären Amin Diäthanolamin noch stärker ausgeprägt als bei dem tertiären Amin Triäthanolamin. Gegenüber dem Vergleichsbeispiel 2.3 beträgt die Reduktion der Formaldehydemissionen in Abhängigkeit von der Zusatzmenge und Art des Amins 27 bis 84 %.

Die anwendungstechnische Eignung der Harzmischungen wurde geprüft. Unter Topfzeit wird die Zeit verstanden, bis die bei 30 °C gelagerte Tränkflotte auf eine Viskosität (gemessen als Auslaufzeit aus einem 4 mm-Becher, DIN 53211, bei 23 °C) von mehr als 60 s oder die Penetrationszeit mit einem definierten Testpapier auf über 70 s angestiegen ist. Die Flexibilität der Kanten wurde mit Hilfe des Biegetestes bei Zimmertemperatur beurteilt. Angegeben wird der Biegeradius, bei dem die Kante gerade noch nicht bricht. Die Spaltfestigkeit ist ein Maß für die Festigkeit des Imprägnats nach der Aushärtung des Kantenharzes. Zur Prüfung wird ein ca. 30 cm langer Kanten-Streifen, dessen längere Kante parallel zur Faserorientierung läuft, parallel zur längeren Kante in der Mitte eingerissen über eine Länge von mindestens 10 cm. Der Maximalwert der Spaltung (Papierteilung quer zum Riß durch Herauslösen einzelner Fasern) wird als Tiefe in mm angegeben. Die Zusammensetzung der Harze ist in Tabelle 1 angegeben.

**Tabelle 2: Anwendungstechnische Kenngrößen und Topfzeit**

| | Topfzeit bei 30 °C in h | Penetrationszeit bei 70 °C in s | Biegeradius in mm | Spaltfestigkeit in mm |
|---|---|---|---|---|
| Beispiel 2.1 (Vergleich) | > 24 | 1 | 6 | 2 |
| Beispiel 2.2 | > 24 | 5 | 6 | 3 |
| Beispiel 2.3 | > 24 | 1 | 6 | 2 - 3 |
| Beispiel 2.4 | > 24 | 1 | 6 | 2 - 3 |
| Beispiel 2.5 | > 24 | 1 | 6 | 2 - 3 |
| Beispiel 2.6 | > 24 | 1 | 6 | 2 - 3 |
| Beispiel 2.7 (Vergleich) | > 24 | 2 | 6 | 2 |
| Vergleichsbeispiel 2.1 | 4 - 5 | 2 | 6 | 2 - 3 |
| Vergleichsbeispiel 2.2 | 3 | 3 | 8 | 2 - 4 |
| Vergleichsbeispiel 2.3 | - | 150 | 8 | 3 - 4 |

Die erfindungsgemäßen Harze gemäß den Beispielen 2.2 bis 2.6 ergeben hinsichtlich Flexibilität (Biegeradius) und Spaltfestigkeit dem Stand der Technik entsprechende Harze. Die Topfzeit, d.h. die Zeit, während der die angesetzte Tränkflotte verarbeitet werden kann, ist gegenüber den Harzen nach dem Stand der Technik (Vergleichsbeispiele 2.1 bis 2.3) deutlich verlängert.

### Beispiel 3: Unveräthertes Harnstoff-Formaldehyd-Harz

150 g eines handelsüblichen wäßrigen unverätherten Harnstoff-Formaldehyd-Harzes (Festkörper-Massenanteil von ca. 55 %, Formaldehyd-Harnstoff-Verhältnis 1,9 mol/mol, bestimmt durch ¹³C-NMR; Verdünnbarkeit mit Wasser bei 20 °C über 25 ml/g; Viskosität gemessen als Auslaufzeit nach DIN 53 211 bei 23 °C: 13 s) wurden mit den in der Tabelle 3 angegebenen Zusätzen vermischt (M = wäßrige weichmacherfreie Copolymerisat-Dispersion auf Basis von Styrol und einem Acrylsäureester, ®Mowilith VDM 7830, Festkörper-Massenanteil ca. 50 %, Clariant GmbH; Ammoniumchloridlösung in Wasser, 25 g NH₄Cl in 100 g Lösung; S = Sorbit, wäßrige Lösung mit einem Festkörper-Massenanteil von 70 %; DEA = Diäthanolamin; TEA = Triäthanolamin); die Mischung wurde auf Papier mit einer flächenbezogenen Masse von 60 g/m² aufgerakelt, das imprägnierte Papier wurde 40 Sekunden in einem Umluftofen bei 160 °C getrocknet. Die Beladung betrug 27 bis 29 % (Masse des getrockneten Harzes bezogen auf die Masse des imprägnierten Papiers). Auf das so hergestellte Imprägnat wurde ein handelsüblicher säurehärtender Lack (Treffert GmbH, Typ 136-07 mit Härter 176-01; Basis wäßrige Polyole mit Aminoplasten) mit einer flächenbezogenen Masse von bis zu 14 g/m² aufgerakelt und bei 155 bis 160 °C getrocknet.

Die so hergestellten Folienproben wurden vor jeder Messung drei Tage im Normklima (23 °C, 50 % relative Luftfeuchtigkeit) konditioniert. Die Messung der Formaldehydemission erfolgte nach der Norm EN 717-2. Die Mittelwerte der Meßwerte nach 1 bis 4 Stunden sind in der Tabelle 3 angegeben.

**Tabelle 3 Zusammensetzung des Imprägniermittels und Resultate der Prüfung der Formaldehyd-Emission**

| | | Beispiel 3.1 | Beispiel 3.2 | Beispiel 3.3 | Beispiel 3.4 | Vergleich |
|---|---|---|---|---|---|---|
| Copolymerisat-Dispersion M | g | 170,1 | 171,3 | 169,3 | 169,9 | 168,3 |
| Wasser | g | 188,1 | 190,5 | 186,17 | 187,1 | 184,5 |
| Ammoniumchloridlösung | g | 1,7 | 1,7 | 1,7 | 1,7 | 1,7 |
| Sorbit | g | 1,7 | 1,7 | 1,7 | - | - |
| Amin (Art) | g | (DEA) 1,7 | (TEA) 5,0 | (DEA) 3,2 | (DEA) 2,5 | - |
| Formaldehyd-Emission | | 1,6 | 1,4 | 1,3 | 1,5 | 1,8 |
| | in mg/(h·m²) | | | | | |

Die Wirkung des Aminzusatzes ist aus den Werten für die Formaldehydemission zu erkennen. Es ist weiter zu erkennen, daß die Wirkung des sekundären Amins DEA die des tertiären Amins TEA deutlich übertrifft.

Bei Zugabe der Hilfsstoffe tritt keine Veränderung der anwendungsrelevanten Kenngrößen Viskosität (hier bestimmt nach DIN 53 211, gemessen bei 23 °C) und Penetration (bestimmt an einem Testpapier) auf, auch nach Lagerung der Tränkflotten (bei 30 °C, über 7 h). Da die Lagerstabilität von Harnstoffharzen bei der Zugabe von Aminen abnimmt, ist es empfehlenswert, den Zusatz von Aminen erst unmittelbar vor Beginn der Imprägnierung vorzunehmen.

### Beispiel 4: teilweise veräthertes Harnstoff-Formaldehyd-Harz

623,7 g Formaldehyd (39 %ige wäßrige Lösung), 0,216 g Natronlauge (50 %ige wäßrige Lösung) und 162,2 g Harnstoff wurden vorgelegt und auf 80 °C erhitzt. Bei Erreichen von 65 °C wurden 0,864 g Natronlauge (50 %ige wäßrige Lösung) zugegeben. Es erfolgte ein exothermiebedingter Temperaturanstieg um ca. 7 °C. Nach Erreichen von 80 °C wurde 15 min lang methyloliert und anschließend auf 58 °C abgekühlt. Sodann wurden 1038 g Methanol innerhalb von 20 min zulaufen gelassen. Dabei wurde darauf geachtet, daß eine Temperatur von 40 °C nicht unterschritten wurde. Nach Beendigung der Methanolzugabe wurden 4,81 g Salpetersäure (53 %ige wäßrige Lösung) zugesetzt. Es erfolgte abermals ein exothermiebedingter Temperaturanstieg um ca. 7 °C. Dann wurde auf 50 °C erwärmt und 60 min bei 50 °C veräthert. Anschließend wurde mit 2,376 g Natronlauge (50 %ige wäßrige Lösung) neutralisiert, die Reaktionslösung wurde mit einem Eisbad auf 25 °C abgekühlt und der pH-Wert auf 9,6 bis 9,7 eingestellt. An einem Rotationsverdampfer wurde auf ca. 432 g eingeengt. Der Feststoffgehalt wurde anschließend durch Zugabe von voll entsalztem (VE-) Wasser auf 75 % und der pH-Wert auf 9,5 bis 10,5 eingestellt.

Die Harzlösung hatte einen Festkörper-Massenanteil (nichtflüchtiger Anteil) von 74,6 %; einen pH-Wert von 9,7; einen Massenanteil von freiem Formaldehyd von 0,7 %; die Viskosität bei 23 °C betrug 125 mPa·s. Gemäß Analyse mit ¹³C-NMR beträgt das Stoffmengenverhältnis *n*(Harnstoff): *n*(Formaldehyd): *n*(MeO-Gruppen) 1 mol: 1,94 mol : 1,58 mol.

### Beispiel 5: Anwendungstechnische Prüfung

Zu jeweils 100 g der 75 %igen Harzlösung aus Beispiel 4 wurden die in untenstehender Tabelle angegebenen Mengen an Polyäthylenglykol 400 (PEG), p-Toluolsufonsäure (TSS) sowie die weiteren angegebenen Hilfsmittel zugesetzt. Die Tränklösung des Vergleichsbeispiels 5 enthält weder Amin noch Sorbit. Die Tränkflotte wurde jeweils durch Zugabe von VE-Wasser auf einen Festkörper-Massenanteil (nichtflüchtiger Anteil) von 75 % (bestimmt durch Trocknen, 1 h bei 120 °C, Glasschälchen) eingestellt. Diese Harzflotten wurden auf Papiere mit einer flächenbezogenen Masse von 200 g/m² (typischer Kantenkarton) aufgerakelt, das imprägnierte Papier wurde während 90 Sekunden bei 180 °C (in einem Umluftofen) getrocknet. Der Harzauftrag betrug 38 bis 42 % (Masse des Festharzes bezogen auf die Masse des trockenen, unimprägnierten Papiers).

Zur Bestimmung der Formaldehydemissionen wurden die Kantenproben vor jeder Messung 3 Tage im Normklima (23 °C, 50 % relative Luftfeuchtigkeit) konditioniert. Die Messung der Formaldehydemissionen (F-Emission) erfolgte nach EN 717-2. Die in der Tabelle angegebenen Formaldehydemissionen sind als Mittelwerte der 1- bis 4-Stundenwerte aufgelistet:

**Tabelle 4: Zusammensetzung der Imprägniermittel und Formaldehydemission**

| Beispiel | PEG | TSS | S | Amin | F-Emission Normklima mg/(h·m²) |
|---|---|---|---|---|---|
| Beispiel 5.1 | 36 g | 3,3 g | 1,7 g | 2,0 g DEA | 1,1 |
| Beispiel 5.2 | 36 g | 3,3 g | 1,7 g | 3,0 g TEA | 1,3 |
| Beispiel 5.3 | 36 g | 3,3 g | - | 2,0 g DEA | 1,2 |
| Vergleichsbeispiel 5 | 36 g | 3,3 g | - | - | 1,7 |

| | | | | | |
|---|---|---|---|---|---|
| Legende: PEG = Polyäthylenglykol ca. 400 g/mol; S= Sorbit, 70 %ige wäßrige Lösung; DEA= Diäthanolamin, TEA= Triäthanolamin | | | | | |

## Patentansprüche

1. Verfahren zur Verminderung der Formaldehyd-Emission aus Folien und Kanten, wobei zur Imprägnierung wäßrige Aminoharzgemische verwendet werden, enthaltend aliphatische lineare, verzweigte oder cyclische Amine A mit mindestens einer sekundären Aminogruppe, mindestens einer Hydroxylgruppe und 2 bis 20 Kohlenstoffatomen sowie unverätherte oder zumindest teilweise verätherte Aminoharze **B**.

2. Verfahren nach Anspruch 1, **dadurch gekennzeichnet, daß** die Amine **A** ausschließlich sekundäre Aminogruppen aufweisen.

3. Verfahren nach einem oder mehreren der Ansprüche 1 bis 2, **dadurch gekennzeichnet, daß** in den Aminen **A** die Zahl der Hydroxylgruppen mindestens gleich groß ist wie die Zahl der Aminogruppen.

4. Wäßriges Aminoharzgemisch, enthaltend aliphatische lineare, verzweigte oder cyclische Amine **A** mit mindestens einer sekundären Aminogruppe, mindestens einer Hydroxylgruppe und 2 bis 20 Kohlenstoffatomen sowie unverätherte oder zumindest teilweise verätherte Aminoharze **B**, wobei die Aminoharze einen Massenanteil von Melamin in dem Aminoharz von mehr als 5 % oder weniger als 1 % aufweisen, wenn die Amine **A** tertiäre Hydroxyalkylamine enthalten.

5. Wäßriges Aminoharzgemisch nach Anspruch 4, **dadurch gekennzeichnet, daß** die Amine **A** ausschließlich sekundäre Aminogruppen enthalten.

6. Wäßriges Aminoharzgemisch nach Anspruch 4, **dadurch gekennzeichnet, daß** die Anzahl der Hyxdroxylgruppen in den Aminen **A** mindestens gleich groß ist wie die Anzahl der Aminogruppen.

7. Wäßriges Aminoharzgemisch nach Anspruch 4, **dadurch gekennzeichnet, daß** die Amine ausgewählt sind aus Diäthanolamin, Bis-2-hydroxypropylamin, Bis-3-hydroxypropylamin, N-Methyläthanolamin, N-Benzyläthanolamin, 2-Hydroxyäthylpiperazin und N,N'-Bis-(2-hydroxyäthyl)-diaminoäthan.

8. Wäßriges Aminoharzgemisch nach Anspruch 4, **dadurch gekennzeichnet, daß** die Aminoharze **B** einen Stoffmengenanteil von Aminotriazinen, bezogen auf die Summe der Stoffmengen von Aminotriazinen und Harnstoff, von 0 bis 1 mol/mol; einen Gehalt an gebundenem Formaldehyd je Aminogruppe von 0,5 bis 2,0 mol/mol und einen Gehalt an vom Verätherungsalkohol herrührenden Alkoxygruppen je Aminogruppe von 0,0 bis 2,0 mol/mol aufweisen.

9. Wäßriges Aminoharzgemisch nach Anspruch 8, **dadurch gekennzeichnet, daß** der Gehalt an vom Verätherungsalkohol herrührenden Alkoxygruppen je Aminogruppe mindestens von 0,1 mol/mol beträgt, und daß die Alkoxygruppen ausgewählt sind aus Methoxy-, Äthoxy-, n-Butoxy- und iso-Butoxygruppen.

10. Wäßriges Aminoharzgemisch nach einem oder mehreren der Ansprüche 4 bis 9, **dadurch gekennzeichnet, daß** es zusätzlich ein Polyäthylenglykol **C1** mit einer zahlenmittleren molaren Masse von bis zu ca. 2000 g/mol enthält.

11. Wäßriges Aminoharzgemisch nach einem oder mehreren der Ansprüche 4 bis 10, **dadurch gekennzeichnet, daß** es zusätzlich ein Copolymerisat **C2** enthält, das mindestens einen Massenanteil von 50 % von Einheiten abgeleitet von (Hydroxy-)Alkyl(meth)acrylaten und/oder (Meth)Acrylsäure aufweist.

12. Wäßriges Aminoharzgemisch nach einem oder mehreren der Ansprüche 4 bis 11, **dadurch gekennzeichnet, daß** es zusätzlich Harnstoff enthält, wobei das Verhältnis der Masse des zugesetzten Harnstoffs zu der Masse des Aminoharzes 0,5 bis 5 cg/g beträgt.

13. Wäßriges Aminoharzgemisch nach einem oder mehreren der Ansprüche 4 bis 12, **dadurch gekennzeichnet, daß** es zusätzlich einen höherfunktionellen Alkohol mit 3 bis 6 Hydroxylgruppen enthält, wobei das Verhältnis der Masse des Alkohols zur Masse des Aminoharzes 0,5 bis 7 cg/g beträgt.

14. Verwendung von wäßrigen Aminoharzgemischen nach einem oder mehreren der Ansprüche 4 bis 13 zur Herstellung von Finish-Folien und/oder Kanten, wobei Papiere oder Karton mit den wäßrigen Aminoharzgemischen getränkt und anschließend getrocknet werden.

15. Finish-Folien oder Kanten, hergestellt durch Tränken von Papier oder Karton mit wäßrigen Aminoharzgemischen gemäß einem oder mehreren der Ansprüche 4 bis 13.

## Claims

1. A method of reducing the emission of formaldehyde from foils and edge bandings impregnated using an aqueous amino resin blend comprising aliphatic linear, branched or cyclic amines **A** containing at least one secondary amino group, at least one hydroxyl group and 2 to 20 carbon atoms, and also unetherified or at least partly etherified amino resins **B**.

2. The method as claimed in claim 1, wherein the amines **A** contain only secondary amino groups.

3. The method as claimed in one or more of claims 1 to 2, wherein in the amines A the number of hydroxyl groups is at least the same as the number of amino groups.

4. An aqueous amino resin blend comprising aliphatic linear, branched or cyclic amines **A** containing at least one secondary amino group, at least one hydroxyl group and 2 to 20 carbon atoms, and also unetherified or at least partly etherified amino resins **B**, the amino resins having a mass fraction of melamine in the amino resin of more than 5% or less than 1% when the amines A comprise tertiary hydroxyalkylamines.

5. The aqueous amino resin blend as claimed in claim 4, wherein the amines **A** contain only secondary amino groups.

6. The aqueous amino resin blend as claimed in claim 4, wherein the number of hydroxyl groups in the amines **A** is at least the same as the number of amino groups.

7. The aqueous amino resin blend as claimed in claim 4, wherein the amines are selected from diethanolamine, bis-2-hydroxypropylamine, bis-3-hydroxypropylamine, N-methylethanolamine, N-benzylethanolamine, 2-hydroxyethylpiperazine and N,N'-bis-(2-hydroxyethyl)diaminoethane.

8. The aqueous amino resin blend as claimed in claim 4, wherein the amino resins **B** have an amount of substance fraction of aminotriazines, based on the sum of the amounts of substance of aminotriazines, and urea, of 0 to 1 mol/mol; an amount of bound formaldehyde per amino group of 0.5 to 2.0 mol/mol; and an amount of alkoxy groups originating from the etherifying alcohol, per amino group, of 0.0 to 2.0 mol/mol.

9. The aqueous amino resin blend as claimed in claim 8, wherein the amount of alkoxy groups originating from the etherifying alcohol, per amino group, is at least 0.1 mol/mol and wherein the alkoxy groups are selected from methoxy, ethoxy, n-butoxy and isobutoxy groups.

10. The aqueous amino resin blend as claimed in one or more of claims 4 to 9, which additionally comprises a polyethylene glycol **C1** having a number-average molar mass of up to 2000 g/mol.

11. The aqueous amino resin blend as claimed in one or more of claims 4 to 10, which additionally comprises a copolymer **C2** containing a mass fraction of 50% of units derived from (hydroxy)alkyl (meth)acrylates and/or (meth)acrylic acid.

12. The aqueous amino resin blend as claimed in one or more of claims 4 to 11, which additionally comprises urea, wherein the ratio of the mass of the urea added to the mass of the amino resin is 0.5 to 5cg/g.

13. The aqueous amino resin blend as claimed in one or more of claims 4 to 12, further comprising a polyfunctional alcohol having 3 to 6 hydroxyl groups, the ratio of the mass of the alcohol to the mass of the amino resin being 0.5 to 7 cg/g.

14. The use of an aqueous amino resin blend as claimed in one or more of claims 4 to 13 for producing finish foils and/or edgings, wherein papers or cardboard are impregnated with the aqueous amino resin blends and then dried.

15. A finish foil or edge banding produced by impregnating paper or cardboard with aqueous amino resin mixtures as claimed in one or more of claims 4 to 13.

## Revendications

1. Procédé pour réduire l'émission de formaldéhyde de films et de bordures, dans lequel on utilise pour l'imprégnation des mélanges aqueux de résines amino contenant des amines A aliphatiques linéaires, ramifiées ou cycliques, comportant au moins un groupe amino secondaire, au moins un groupe hydroxy et de 2 à 20 atomes de carbone, ainsi que des résines amino B non éthérifiées ou au moins partiellement éthérifiées.

2. Procédé selon la revendication 1, **caractérisé en ce que** les amines A comportent exclusivement des groupes amino secondaires.

3. Procédé selon une ou plusieurs des revendications 1 et 2, **caractérisé en ce que**, dans les amines A, le nombre des groupes hydroxy est au moins égal au nombre des groupes amino.

4. Mélange aqueux de résines amino contenant des amines A aliphatiques linéaires, ramifiées ou cycliques comportant au moins un groupe amino secondaire, au moins un groupe hydroxy et de 2 à 20 atomes de carbone, ainsi que des résines amino B non éthérifiées ou au moins partiellement éthérifiées, les résines amino ayant proportion en masse de mélamine dans la résine amino de plus de 5 % ou de moins de 1 %, lorsque les amines A contiennent des hydroxylamines tertiaires.

5. Mélange aqueux de résines amino selon la revendication 4, **caractérisé en ce que** les amines A comportent exclusivement des groupes amino secondaires.

6. Mélange aqueux de résines amino selon la revendication 4, **caractérisé en ce que** dans les amines A le nombre des groupes hydroxy est au moins égal au nombre des groupes amino.

7. Mélange aqueux de résines amino selon la revendication 4, **caractérisé en ce que** les amines sont choisies parmi la diéthanolamine, la bis-2-hydroxypropylamine, la bis-3-hydroxypropylamine, la N-méthyléthanolamine, la N-benzyléthanolamine, la 2-hydroxyéthylpipérazine et le N,N'-bis(2-hydroxyéthyl)diaminoéthane.

8. Mélange aqueux de résines amino selon la revendication 4, **caractérisé en ce que** les résines amino B ont une teneur en aminotriazines, par rapport à la somme des quantités d'aminotriazines et d'urée, allant de 0 à 1 mole/mole ; une teneur en formaldéhyde lié par groupe amino allant de 0,5 à 2,0 moles/mole et une teneur en groupes alcoxy provenant de l'alcool d'éthérification, par groupe amino, allant de 0,0 à 2,0 moles/mole.

9. Mélange aqueux de résines amino selon la revendication 8, **caractérisé en ce que** la teneur en groupes alcoxy provenant de l'alcool d'éthérification, par groupe amino, est d'au moins 0,1 mole/mole, et **en ce que** les groupes alcoxy sont choisis parmi les groupes méthoxy, éthoxy, n-butoxy et isobutoxy.

10. Mélange aqueux de résines amino selon une ou plusieurs des revendications 4 à 9, **caractérisé en ce qu'**il contient en outre un polyéthylèneglycol C1 ayant une masse molaire moyenne en nombre allant jusqu'à environ 2 000 g/mole.

11. Mélange aqueux de résines amino selon une ou plusieurs des revendications 4 à 10, **caractérisé en ce qu'**il contient en outre un copolymère C2 qui présente au moins une teneur en masse de 50 % en motifs dérivés de (méth)acrylates d'(hydroxy)alkyle et/ou d'acide (méth)acrylique.

12. Mélange aqueux de résines amino selon une ou plusieurs des revendications 4 à 11, **caractérisé en ce qu'**il contient en outre de l'urée, le rapport de la masse de l'urée ajoutée à la masse de la résine amino allant de 0,5 à 5 cg/g.

13. Mélange aqueux de résines amino selon une ou plusieurs des revendications 4 à 12, **caractérisé en ce qu'**il contient en outre un alcool à plus haut degré de fonctionnalité comportant de 3 à 6 groupes hydroxy, le rapport de l'alcool à la masse de la résine amino allant de 0,5 à 7 cg/g.

14. Utilisation de mélanges aqueux de résines amino selon une ou plusieurs des revendications 4 à 13, pour la fabrication de films de finissage et/ou de bordures, des papiers ou du carton étant imprégnés avec les mélanges aqueux de résines amino et ensuite séchés.

15. Films de finissage ou bordures, produits par imprégnation de papier ou de carton avec des mélanges de résines amino selon une ou plusieurs des revendications 4 à 13.
